# EUROPEAN PATENT SPECIFICATION

(11) **EP 1 838 528 B1**
(45) Date of publication and mention of the grant of the patent: **27.02.2013**
(21) Application number: 06717748.5
(22) Date of filing: 09.01.2006
(51) Int. Cl.: B32B 27/08, B32B 27/28, B32B 27/30, B32B 27/36, B41M 5/50, B41M 5/52, G09F 17/00, G09F 19/22, G09F 21/04, E04D 12/00

(54) **FLEXIBLE PRINTED MULTILAYER STRUCTURE**
FLEXIBLE, BEDRUCKTE, MEHRSCHICHTIGE STRUKTUR
STRUCTURE MULTICOUCHE IMPRIMÉE SOUPLE

(30) Priority: 07.01.2005 US 642345 P
(43) Date of publication of application: 03.10.2007
(73) Proprietor: E.I. DU PONT DE NEMOURS AND COMPANY, Wilmington, DE 19898 (US)
(72) Inventor: TROUILHET, Yves, M., CH-1222 Vesenaz (CH); ROLLAND, Loic Pierre, Vesenex, F-01220 Divonne Les Bains (FR)
(74) Representative: Heinemann, Monica
(86) International application number: PCT/US2006/000584
(87) International publication number: WO 2006/074424

(56) References cited:
- EP-A- 0 611 037
- WO-A-01/23125
- WO-A-01/23184

## Description

### FIELD OF THE INVENTION

The invention relates to a printed multilayer structure, for use *inter alia* as an advertising display, a banner, or as a cover for vehicles, building façades, structures, luggage, or the like. Preferably, the multilayer structure is also flexible.

### BACKGROUND OF THE INVENTION

Flexible, printable coated sheets are convenient for use as advertising displays, banners and vehicle tarpaulins for example. Frequently, these sheets are made of PVC (polyvinyl chloride). PVC provides adequate service but suffers from the drawback that toxic black fumes are released when it is burned, which is particularly dangerous if the banners are used indoors, as in indoor sports arenas, if they are stored indoors or if they are incinerated. Furthermore, PVC surfaces are not directly printable, so that at least one additional, printable layer must be laminated to PVC sheets that are used in applications requiring graphics. This multi-step manufacturing process is expensive and time consuming. PVC materials also typically include plasticizers or phthalate modifiers for reducing brittleness. Plasticizers and modifiers tend to migrate, however, and can lead to stains on the printed surface.

Fabrics made from high-density polyethylene fibers, such as those available from E. I. du Pont de Nemours and Company under the trademark Tyvek®, have also been used as flexible weatherproof printable sheets, for use *inter alia* as advertising displays, banners and as covers for cars, boats and campers. This material has the advantage that it is halogen-free. Tyvek® is breathable, allows trapped moisture to escape and is a good barrier to UV rays. However, this material is very flexible and thus is used mainly for smaller pieces. Furthermore, liquid ink is not rapidly absorbed into high density polyethylene. Particularly, this is a disadvantage when the printing is carried out vertically and on a large scale, since unabsorbed ink may easily drip down the printing surface before it has dried.

Various laminated structures have been proposed for related uses. For example, U.S. Patent No. 4,589,804 describes a waterproof membrane comprising an elastomeric sheet supported on a nonwoven or woven fabric useful as a roof covering or a pond liner.

U.S. Patent Appln. Publn. No. 2002/0031964 A1 and related International Patent Appln. Publn. No. W02001/92008 describe a water resistant laminate for use as roof linings and linings for ponds and tanks, etc. The laminate includes a nonwoven substrate coated with a polymer that completely impregnates the substrate.

U.S. Patent No. 6,764,753 B2 describes smokable films as casings for smokable food products. The films comprise an aliphatic polyamide and a block copolyetherester elastomer with selected vapor permeability.

European Patent No. EP-A-0611037 describes a laminate usable in protective clothing, diapers, and roof underliners. A moisture vapor permeable, liquid impermeable, barrier layer with a thickness of 3 to 25 µm is coextruded with a release layer (1 to 5 µm thick) on one side of the barrier layer and a tie layer (1 to 5 µm thick) on the opposite side of the barrier layer. The tie layer is adhered to a porous substrate such as a woven or nonwoven fabric. The tie layer typically comprises a thermoplastic such as an ethylene copolymer or a polyurethane and serves to improve the adherence between the porous substrate and the breathable thermoplastic barrier layer.

International Patent Appln. Publn. No. WO2001/23125 describes a laminate structure for use as roof insulation. The laminate comprises a substrate layer of woven or non-woven material; a moisture vapor control layer attached to the substrate, a tie layer comprising one or more polymers comprising from about 30 to about 90 wt% ethylene comonomer units and from about 10 to about 70 wt% vinyl acetate co-monomer units, and a layer comprising one or more copolyetherester(s) in an amount of at least 50 wt-% based on the total amount of polymer in the layer. The layer of copolyetherester(s) is notably thicker than the underlying tie layer.

None of these known structures is adequate as a flexible printable multilayer structure for use as a large advertising display, as a banner, or as a cover for vehicles, building façades, structures, luggage and the like.

There is therefore a need for a printable multilayer structure that is preferably flexible, that is composed of substantially halogen-free materials, and that combines good printability and maintenance of good print appearance.

### SUMMARY OF THE INVENTION

According to the present invention, a printed multilayer structure That is substantially halogen-free is provided.

The multilayer structure comprises:
a substrate layer of paper, board, polymeric film, or woven or nonwoven fabric;
a substantially impermeable intermediate layer of an ethylene copolymer on at least one face of the substrate layer, wherein substantially impermeable refers to a moisture vapor transfer rate ("MVTR") of 100 g/m²/day or less, measured according to DIN 53122; and
an outer layer of a thermoplastic hydrophilic polymer on the intermediate layer having a permeability corresponding to an MVTR (moisture vapour transmission rate) of 1,000 to 20,000 g/m²/day measured according to ASTM 96BW;
wherein the outer layer of a thermoplastic hydrophilic polymer has a thickness t from 5 to 50 µm and the intermediate layer has a thickness T from 50 to 500 µm; and wherein the multilayer structure is substantially free of halogen elements, and wherein the outer layer is printed.

The invention also provides a flexible printed multilayer structure that is preferably weatherproof. The printed multilayer structure is suitable for outdoor or indoor use as an advertising display, a banner, or as a cover for vehicles, building façades, structures, luggage, or the like. The printed multilayer structure comprises the printable multilayer structure of the invention, and at least one outer thermoplastic hydrophilic polymer layer is printed.

### DETAILED DESCRIPTION

The following definitions apply to the terms as used throughout this specification, unless otherwise limited in specific instances.

The terms "finite amount" and "finite value", as used herein, refer to an amount that is greater than zero.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

The flexible printable multilayer structure according to the present invention is halogen-free and comprises: a substrate layer of paper, board, a polymeric film, or woven or non-woven fabric; a substantially impermeable intermediate layer of an ethylene copolymer on one or both faces of the substrate; and an outer layer of a thermoplastic hydrophilic polymer on the intermediate layer(s). The individual layers are adjacent in the multilayer structure. Preferably, however, they may be adjoining, and, more preferably, they are contiguous.

The substrate, which serves as support and reinforcement for the multilayer structure, can be any material that meets the physical requirements of an intended use of the multilayer structure. For example, paper may be a suitable substrate for mild conditions, such as indoor use or applications requiring only a single use. In contrast, a polymeric film or synthetic nonwoven fabric may be more suitable for outdoor uses, which will likely require that the substrate maintain its integrity in windy conditions, or for applications that call for multiple uses. Some preferred substrates include, without limitation, paper or board based on cellulosic fibers, polymeric film based on polyester, polyamide, polypropylene or polyethylene, a woven or non-woven fabric based on polyester, polypropylene, cotton, polyamide, polyethylene, polyaramide, silk, or wool. Preferably, the substrate layer has a tensile strength at break of about 5 to about 2000 MPa, measured according to ASTM D882-83. Also preferably, the printable multilayer structure has a tensile strength at break of about 5 to about 2000 MPa, measured according to ASTM D882-83.

The intermediate layer is applied on one face or both faces of the substrate layer. The intermediate layer is substantially impermeable. The term "substantially impermeable", as used herein, refers to a moisture vapor transfer rate ("MVTR") of about 100 g/m²/day or less, measured according to DIN 53122.

The intermediate layer comprises at least one ethylene copolymer, such as one or more ethylene - vinyl acetate (EVA) copolymers, one or more ethylene - alkyl acrylate copolymers, one or more ethylene acrylic acid copolymers, and/or one or more ethylene methacrylic acid copolymers.

Essentially any ethylene alkyl acrylate copolymer is suitable for use in the invention. One key property is the overall polarity of the polymer, which should enable it to act as an adhesive between the substrate and the outer layer of the multilayer structure. Preferably, however, the ethylene - alkyl acrylate copolymers include from about 5 to about 35 wt% of alkyl acrylate, more preferably about 15 to about 25%, and still more preferably about 18 to about 22%, based on the total weight of the ethylene copolymer. Preferred ethylene - alkyl acrylate copolymers include, without limitation, EMA (ethylene-methylacrylate copolymer), EBA (ethylene-butylacrylate copolymer) and EEA (ethylene-ethylacrylate copolymer).

Methods of preparing ethylene alkyl acrylate copolymers and ethylene acid copolymers are well known in the art. See, for example, the Modem Plastics Encyclopedia, McGraw Hill, (New York, 1994); and the Wiley Encyclopedia of Packaging Technology, 2d edition, A.L Brody and K.S. Marsh, Eds., Wiley-Interscience (Hoboken, 1997). It is believed that both batch reactor and tubular reactor processes are suitable for preparing ethylene copolymers for use in the invention. In addition, suitable ethylene alkyl acrylate copolymers and ethylene acid copolymers are commercially available, for example, under the tradenames Elvaloy® AC and Nucrel® from E. I. du Pont de Nemours and Company ("DuPont").

Likewise, essentially any ethylene vinyl acetate copolymer is suitable for use in the intermediate layer. Again, polarity is a key property of this copolymer. Preferably, the ethylene vinyl acetate copolymers include about 5 to about 35 wt% of vinyl acetate, more preferably about 15 to about 25%, and still more preferably about 18 to about 22%, based on the total weight of the EVA copolymer.

Several EVA copolymers suitable for use in the present invention are commercially available. These include Elvax® copolymers, available from DuPont. In addition, methods of preparing EVA copolymers are well known in the art. See, for example, the *Modem Plastics Encyclopedia* and the *Wiley Encyclopedia of Packaging Technology.*

The outer layer comprises a thermoplastic hydrophilic polymer and has a permeability corresponding to a MVTR of about 1,000 to about 20,000 g/m²/day, measured according to.ASTM 96BW. Without wishing to be held to theory, it is believed that a permeability in this range enables the printing ink applied on the outer layer to be absorbed quickly into the printable surface of the multilayer structure.

The outer layer of the printed multilayer structure may be made of any thermoplastic hydrophilic polymer, or any blend comprising a thermoplastic hydrophilic polymer, that meets the permeability criteria set forth above. Some preferred outer layers comprise one or more thermoplastic elastomers. Suitable thermoplastic elastomers include, without limitation, copolyetheramides, copolyetheresters, polyether urethanes, homopolymers or copolymers of polyvinyl alcohol, and the like. Also suitable are polymer blends that comprise at least one suitable thermoplastic elastomer, and mixtures of two or more suitable thermoplastic elastomers.

Copolyetheramides are well known in the art, as described in U.S. Pat No. 4,230,838, 4,332,920 and 4,331,786, for example. These polymers are comprised of a linear and regular chain of rigid polyamide segments and flexible polyether segments, as represented by the general formula 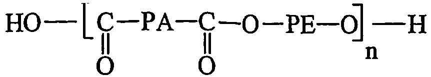 wherein "PA" represents a linear saturated aliphatic polyamide sequence formed from a lactam or amino acid having a hydrocarbon chain containing 4 to 14 carbon atoms, or from an aliphatic C₆ to C₉ diamine, in the presence of a chain-limiting aliphatic carboxylic diacid having 4 to 20 carbon atoms. The polyamide has an average molecular weight between 300 and 15,000 Daltons. In this formula, "PE" represents a polyoxyalkylene sequence formed from linear or branched aliphatic polyoxyalkylene glycols, mixtures thereof or copolyethers derived therefrom. The polyoxyalkylene glycols preferably have a molecular weight of less than or equal to 6000 Daltons. The number of repeat units, "n", is preferably sufficient so that the polyetheramide copolymer has an intrinsic viscosity of from about 0.8 to about 2.05. The preparation of these polyetheramides comprises the step of reacting a dicarboxylic polyamide, the COOH groups of which are located at the chain ends, with a polyoxyalkylene glycol that is hydroxylated at its chain ends, in the presence of a catalyst such as a tetra-alkyl ortho-titanate having the general formula Ti(OR)₄, wherein "R" represents a linear branched aliphatic hydrocarbon radical having from 1 to 24 carbon atoms. The softness of the polyetheramide block copolymer generally increases as the relative amount of polyether units is increased. For purposes of the present invention, the molar ether:amide ratio can vary from 90:10 to 10:90, preferably 80:20 to 60:40; and the shore D hardness is less than about 70, preferably less than about 60.

The copolyetheresters are discussed in detail in patents such as U.S. Pat. Nos. 3,651,014; 3,766,146; and 3,763,109. They are comprised of a multiplicity of recurring long chain units and short chain units joined head-to-tail through ester linkages, the long chain units being represented by the formula 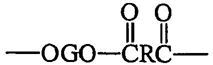 and the short chain units being represented by the formula 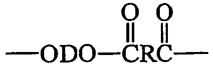 where "G" represents a divalent radical remaining after the removal of terminal hydroxyl groups from a poly (alkylene oxide) glycol having a molecular weight of about 400 to about 6000 Daltons and a carbon to oxygen ratio of about 2.0-4.3. "R" represents a divalent radical remaining after removal of hydroxyl groups from a dicarboxylic acid having a molecular weight less than about 300 Daltons. "D" represents a divalent radical remaining after removal of hydroxyl groups from a diol having a molecular weight less than about 250 Daltons. The amount of short chain ester units is preferably from about 15 to about 95 percent by weight of the copolyetherester. The preferred copolyetherester polymers are those in which the polyether segment is obtained by polymerization of tetrahydrofuran and the polyester segment is obtained by polymerization of tetramethylene glycol and phthalic acid. The softness of the copolyetherester block copolymers also generally increases as the relative amount of polyether units is increased. For purposes of the present invention, the molar ether:ester ratio can vary from 90:10 to 10:90, preferably 80:20 to 60:40; and the shore D hardness is less than about 70, preferably less than about 60.

More preferably, the polyalkylene ether glycol is a copolymer of ethylene oxide and propylene oxide comprising between about 5 and about 40 wt% of ethylene oxide, based on the total weight of the thermoplastic hydrophilic polymer.

Certain thermoplastic elastomers that are suitable for use in the present invention are available commercially. These include PEBAX™ copolyetheramides, available from the Arkema Group of Paris, France, and Hytrel® copolyetheresters, available from DuPont.

The intermediate and outer layers may include additives that are commonly used in polymer compositions. Such additives include, but are not limited to, pigments, antioxidants, UV stabilizers, flame retardant fillers such as aluminum trihydoxide or magnesium trihydroxide, inorganic fillers such as calcium carbonate, titanium dioxide, or talc, slip enhancers and antiblock agents. Suitable levels of these additives and methods of incorporating additives into polymer compositions will be familiar to those of skill in the art. See, for example, the *Modem Plastics Encyclopedia* or the *Wiley Encyclopedia of Packaging Technology,* complete bibliographic information for both of which is cited in full above.

The multilayer structure is substantially free of halogens. The term "substantially free of halogens", as used herein, refers to materials that include no more than about 10 wt% of halogen elements, based on the total weight of the multilayer structure. More preferably, the multilayer structure includes no more than about 5 wt%, and still more preferably no more than about 1 wt% of halogen elements. These values are averages over the composition of the entire multilayer structure; therefore, those of skill in the art understand that one or more of the chemical components of the individual layers may exceed the stated upper limit of halogen element content. More preferably, however, the chemical components of the substrate, intermediate, and outer layers are substantially free of halogens.

In the present invention, the outer layer of thermoplastic hydrophilic polymer has a thickness t that ranges from about 5 to about 50 µm, preferably about 10 to about 40 µm, and still more preferably about 20 to about 30 µm. Moreover, the intermediate layer has a thickness T that ranges from about 50 to about 500 µm, preferably about 100 to about 400 µm, and still more preferably about 200 to about 300 µm. Also, in some preferred embodiments, the ratio of thickness t to thickness T may range from about 1:5 to about 1:10. More preferably, both the preferred thickness ranges and a preferred t:T ratio occur in a single multilayer structure.

As has been noted above, the multilayer structure according to the invention may be single-faced, wherein the substrate layer is coated on only one side with an intermediate layer and a hydrophilic thermoplastic outer layer. Alternatively, the multilayer structure may be double-faced, wherein the substrate layer is coated on both sides with an intermediate layer of ethylene copolymer and a hydrophilic thermoplastic outer layer.

The flexible printable multilayer structure according to the invention can be produced using means that will be familiar to those of skill in the art, including, for example, extrusion coating, lamination and calendering techniques. The extrusion coating technique is particularly advantageous because it allows for a single step manufacturing process, thus reducing the overall time and costs of production.

Again without wishing to be held to any theory, it is believed that the thinness and permeability of the outer thermoplastic hydrophilic polymer layer provides excellent and rapid retention of the applied printing ink. Printing ink may therefore be applied to the multilayer structure by various processes. Preferred processes include ink-jet processes using water-based or solvent-based printing inks, and laser printing processes. The rapid ink retention by the outer thermoplastic hydrophilic polymer layer enables fast printing with reduced drying temperature and/or time, resulting from the quick absorption of the ink liquid phase. The applied ink remains stable and the aspect of the print remains excellent due to the compatibility of the ink with the components of the multilayer structure. These favorable properties also enable printing under relatively difficult conditions, such as for example on large vertical surfaces, by minimizing the dripping of unabsorbed ink. The preferred thickness ranges and ratios of the thermoplastic hydrophilic polymer and of the intermediate layer enable optimization of the printing quality with respect to the manufacturing costs of the printable multilayer structure.

Furthermore, the flexible printed multilayer structure according to the invention is advantageous for the aforementioned uses where the structure may be exposed to outdoor weather conditions, although it may also be used indoors. The relatively low toxicity of the combustion products of the substantially halogen-free structure is a key advantage in case of fire. Thus, the same material can be used for outdoor and indoor applications without giving rise to inordinate danger in case of fire. Moreover, the multilayer structure is easily disposed of when it is no longer needed.

By choice of the materials for the intermediate and substrate layers of the multilayer structure and their thickness, it is possible to provide the multilayer structure with the desired flexibility and strength. Also depending on the choice of ink and printing method, the printed multilayer structure may be provided with weatherproof characteristics. In industrial practice, sheets of larger sizes, including continuous sheets, can be produced by extrusion coating, lamination or calendaring. The outer layer of the larger sheets can be printed with a pattern or a design or lettering by passing a mobile ink-jet printer over the surface, or by flexography or gravure processes, for example. The printing operation can be carried out in conjunction with the production of the sheets, or it can be carried out later by a purchaser, converter or supplier.

The following example is provided to describe the invention in further detail. This example, which sets forth a preferred mode presently contemplated for carrying out the invention, is intended to illustrate and not to limit the invention.

### EXAMPLE

A three layer printable flexible structure according to the invention was made of
**Substrate**: bi-axially oriented polyester film having a thickness of 23 µm.
**Substantially impermeable intermediate layer**: 95 wt% of an
   ethylene/methylacrylate with 18 wt% methylacrylate and a melt index of 8 dg/min measured according to ASTM D 1238 and 5 wt% of a white master batch containing 50 wt% titanium dioxide in 50 wt%
   ethylene/methylacrylate. The substantially impermeable intermediate layer is colored white, as a background for the printing to be applied to the outer layer (thickness 180 µm).
**Outer layer of a thermoplastic hydrophilic polymer:** a thermoplastic elastomeric ester ether (TEEE) that contains 45 wt% 1,4-butylene terephthalate and 55 wt% ethylene oxide/propylene oxide copolyether terephthalate. This copolyetherester had a calculated ethylene oxide content of 33 wt%, contained 45 wt% short-chain ester units and had a melting temperature of 200°C When the TEEE was formed into a film 25 µm thick, its permeability corresponded to a MVTR value of 20,000 g/m²/day, measured according to ASTM 96BW.

The three layer printable flexible structure was produced by co-extrusion coating on the **Substrate** with a width of 550mm. The ethylene/methylacrylate copolymer was introduced into a 2.5" (63.5 mm) inside diameter extruder and the TEEE into a 3.5" (88.9 mm) inside diameter extruder. Both extruders had a length over diameter ratio of 30. For both extruders, the temperatures in centigrade degrees were set for five (5) zones of equal length according to the following temperature profile: 180°C, 200°C, 220°C, 245°C and 270°C. The connecting pipes, feed block and 800 mm wide flat die temperatures were set at 270°C. The screw of the 2.5" extruder was turned at 220 rpm. The screw of the 3.5" extruder was turned at 9 rpm. The substrate line speed was 15 m/min. At the extruder outlet, a chill-roll with a diameter of 700 mm was set at a temperature of 10°C.

To test the printability of these specimens, the three layer printable structure was attached by adhesive tape to DIN A4 paper sheets with the Substrate adjacent to the paper. This multilayer structure was introduced in a Color Laserjet printer 4550N from Hewlett-Packard. The TEEE side of the structure was printed in different colors with rectangles measuring 2 cm by 3 cm.

The different colored printing inks penetrated well and were retained in the TEEE outer layer, providing excellent printability of the outside of the composite structure, without any smudges or running of the ink. The printing ink was rapidly absorbed by the outer TEEE layer.

The example was repeated, and the thickness of the outer TEEE layer was varied from 5 µm to 40 µm. The best results were obtained with the 20 µm layer.

## Claims

1. A multilayer structure, comprising:
a substrate layer of paper, board, polymeric film, or woven or nonwoven fabric;
a substantially impermeable intermediate layer of an ethylene copolymer on at least one face of the substrate layer, wherein substantially impermeable refers to a moisture vapor transfer rate ("MVTR") of 100 g/m²/day or less, measured according to DIN 53122; and
an outer layer of a thermoplastic hydrophilic polymer on the intermediate layer having a permeability corresponding to an MVTR (moisture vapour transmission rate) of 1,000 to 20,000 g/m²/day measured according to ASTM 96BW;
wherein the outer layer of a thermoplastic hydrophilic polymer has a thickness t from 5 to 50 µm and the intermediate layer has a thickness T from 50 to 500 µm; and wherein the multilayer structure is substantially free of halogen elements, and wherein the outer layer is printed.

2. The multilayer structure of claim 1, wherein the ratio of thickness t to thickness T is from 1:5 to 1:10.

3. The multilayer structure of claim 1 or 2, wherein the outer layer is a thermoplastic elastomeric ester ether (TEEE).

4. The multilayer structure of claim 3 wherein the TEEE has soft segments derived from polyalkylene ether glycol having a molecular weight between 400 and 6000 g/mol), which polyalkylene ether glycol is a polymer or copolymer of ethylene oxide.

5. The multilayer structure of claim 4 wherein the polyalkylene ether glycol is a copolymer cf ethylene oxide and propylene oxide.

6. The multilayer structure of claim 5 wherein the ethylene oxide content of the thermoplastic hydrophilic polymer is between 5 and 40 wt% of the total weight of the thermoplastic hydrophilic polymer.

7. The multilayer structure of any preceding claim wherein the intermediate layer is made from one or more copolymers chosen among ethylene- vinyl acetate and ethylene alkyl (meth)acrylates.

8. The multilayer structure of claim 7 wherein the ethylene alkyl (math)acrylates are selected from EMA (ethylene-methylacrylate copolymer), EBA (ethylene-butylacrylate copolymer) and EEA (ethylene-ethylacrylate copolymer).

9. The multilayer structure of claim 7 or 8 wherein the one or more copolymers of ethylene and alkyl (meth)acrylate contain from 5 to 35 wt% of alkyl (meth)acrylate.

10. The multilayer structure of claim 7 wherein the ethylene vinyl acetate contains from 5 to 35 wt% of vinyl acetate.

11. The multilayer structure of any preceding claim wherein the substrate layer is a paper or board based on cellulosic fibers; a polymeric film based on polyester, polyamide, polypropylene or polyethylene; or a woven or non-woven fabric based on polyester, polypropylene, cotton, polyamide or polyethylene.

12. The multilayer structure of any preceding claim, wherein the substrate layer or the multilayer structure has a tensile strength at break of 5 to 2000 Mpa, measured according to ASTM D882-83.

13. The multilayer structure of any preceding claim which is single-faced, wherein the substrate layer is coated on only one side with an intermediate layer and an outer layer of thermoplastic hydrophilic polymer.

14. The multilayer structure of any one of claims 1 to 12 which is double-faced, wherein the substrate layer is coated on both sides with an intermediate layer of ethylene copolymer and an outer layer of thermoplastic hydrophilic polymer.

15. A flexible printed multilayer structure for outdoor or indoor use as an advertising display, a banner, or as a cover for vehicles, building façades, structures, luggage, or the like, comprising the multilayer structure of any preceding claim.

## Patentansprüche

1. Mehrschichtige Struktur umfassend:
eine Substratschicht aus Papier, Pappe, Polymerfolie oder Gewebe oder Vliesstoff;
eine im Wesentlichen undurchlässige Zwischenschicht aus einem Ethylencopolymer auf mindestens einer Seite der Substratschicht, wobei im Wesentlichen undurchlässig sich auf eine Feuchtigkeitsdampfdurchlässigkeitsrate ("MVTR") von 100 g/m²/Tag oder weniger, DIN 53122 gemäß gemessen, bezieht; und
eine Außenschicht aus einem thermoplastischen hydrophilen Polymer auf der Zwischenschicht, die eine Durchlässigkeit aufweist, die einer MVTR (Feuchtigkeitsdampfdurchlässigkeitsrate) von 1.000 bis 20.000 g/m²/Tag, ASTM 96BW gemäß gemessen, entspricht;
wobei die Außenschicht aus einem thermoplastischen hydrophilen Polymer eine Dicke t von 5 bis 50 µm aufweist und die Zwischenschicht eine Dicke von T von 50 bis 500 µm aufweist; und wobei die mehrschichtige Struktur im Wesentlichen frei von Halogenelementen ist und wobei die Außenschicht bedruckt ist.

2. Mehrschichtige Struktur nach Anspruch 1, wobei das Verhältnis von Dicke t zur Dicke T 1:5 bis 1:10 beträgt.

3. Mehrschichtige Struktur nach Anspruch 1 oder 2, wobei die Außenschicht aus einem thermoplastischen elastomeren Esterether (TEEE) besteht.

4. Mehrschichtige Struktur nach Anspruch 3, wobei der TEEE weiche Segmente aufweist, die von Polyalkylenetherglycol abgeleitet sind, das ein Molekulargewicht zwischen 400 und 6000 g/Mol aufweist, welches Polyalkylenetherglycol ein Polymer oder Copolymer von Ethylenoxid ist.

5. Mehrschichtige Struktur nach Anspruch 4, wobei das Polyalkylenetherglycol ein Copolymer von Ethylenoxid und Propylenoxid ist.

6. Mehrschichtige Struktur nach Anspruch 5, wobei der Ethylenoxidgehalt des thermoplastischen hydrophilen Polymers zwischen 5 und 40 Gew.-%, auf das Gesamtgewicht des thermoplastischen hydrophilen Polymers bezogen, beträgt.

7. Mehrschichtige Struktur nach einem der vorhergehenden Ansprüche, wobei die Zwischenschicht aus einem oder mehreren Copolymeren hergestellt ist, die unter EthylenVinylacetat und Ethylenalkyl(meth)acrylaten ausgewählt werden.

8. Mehrschichtige Struktur nach Anspruch 7, wobei die Ethylenalkyl(meth)acrylate unter EMA (Ethylen-Methacrylat-Copolymer), EBA (Ethylen-Butylacrylat-Copolymer) und EEA (Ethylen-Ethylacrylat-Copolymer) ausgewählt werden.

9. Mehrschichtige Struktur nach Anspruch 7 oder 8, wobei das eine oder die mehreren Copolymere von Ethylen und Alkyl(meth)acrylat 5 bis 35 Gew.-% Alkyl(meth)acrylat enthalten.

10. Mehrschichtige Struktur nach Anspruch 7, wobei das Ethylenvinylacetat 5 bis 35 Gew.-% Vinylacetat enthält.

11. Mehrschichtige Struktur nach einem der vorhergehenden Ansprüche, wobei die Substratschicht ein Papier oder Karton auf der Basis von Cellulosefasern; eine Polymerfolie auf der Basis von Polyester, Polyamid, Polypropylen oder Polyethylen; oder ein Gewebe oder Vliesstoff auf der Basis von Polyester, Polypropylen, Baumwolle, Polyamid oder Polyethylen ist.

12. Mehrschichtige Struktur nach einem der vorhergehenden Ansprüche, wobei die Substratschicht oder die mehrschichtige Struktur eine Zugfestigkeit bei Bruch von 5 bis 2000 MPa, ASTM D882-83 gemäß gemessen, aufweist.

13. Mehrschichtige Struktur nach einem der vorhergehenden Ansprüche, die einflächig ist, wobei die Substratschicht nur auf einer Seite mit einer Zwischenschicht und einer Außenschicht aus thermoplastischem hydrophilem Polymer beschichtet ist.

14. Mehrschichtige Struktur nach einem der Ansprüche 1 bis 12, die doppelflächig ist, wobei die Substratschicht auf beiden Seiten mit einer Zwischenschicht aus Ethylencopolymer und einer Außenschicht aus thermoplastischem hydrophilem Polymer beschichtet ist.

15. Flexible bedruckte mehrschichtige Struktur zur Verwendung im Freien oder in Innenräumen zur Werbungsanzeige, als Spruchband oder als Bedeckung für Fahrzeuge, Gebäudefassaden, Gebäudeteile, Gepäck oder dergleichen, umfassend die mehrschichtige Struktur nach einem der vorhergehenden Ansprüche.

## Revendications

1. Structure multicouche, comprenant:
une couche formant substrat en papier, en carton, de film polymère ou de textile tissé ou non-tissé;
une couche intermédiaire substantiellement imperméable d'un copolymère d'éthylène sur au moins une face de la couche formant substrat, dans laquelle « substantiellement imperméable » correspond à un taux de transmission de la vapeur d'eau (« MVTR ») de 100 g/m²/jour ou moins, mesuré selon la norme DIN 53122; et
une couche externe d'un polymère hydrophile thermoplastique sur la couche intermédiaire ayant une perméabilité correspondant à un MVTR (taux de transmission de la vapeur d'eau) de 1 000 à 20 000 g/m²/jour mesuré selon la norme ASTM 96BW;
dans laquelle la couche externe d'un polymère hydrophile thermoplastique a une épaisseur t de 5 à 50 µm et la couche intermédiaire a une épaisseur T de 50 à 500 µm; et dans laquelle la structure multicouche est substantiellement exempte d'éléments de type halogène, et dans laquelle la couche externe est imprimée.

2. Structure multicouche selon la revendication 1, dans laquelle le rapport de l'épaisseur t à l'épaisseur T est de 1:5 à 1:10.

3. Structure multicouche selon la revendication 1 ou 2, dans laquelle la couche externe est un éther d'ester élastomère thermoplastique (TEEE).

4. Structure multicouche selon la revendication 3, dans laquelle le TEEE possède des segments mous dérivés du polyalcylène éther glycol ayant un poids moléculaire compris entre 400 et 6 000 g/mole, lequel polyalcylène éther glycol est un polymère ou un copolymère d'oxyde d'éthylène.

5. Structure multicouche selon la revendication 4, dans laquelle le polyalcylène éther glycol est un copolymère d'oxyde d'éthylène et d'oxyde de propylène.

6. Structure multicouche selon la revendication 5, dans laquelle la teneur en oxyde d'éthylène du polymère hydrophile thermoplastique est comprise entre 5 et 40 % en pds du poids total du polymère hydrophile thermoplastique.

7. Structure multicouche selon l'une quelconque des revendications précédentes, dans laquelle la couche intermédiaire est constituée d'un ou plusieurs copolymère(s) choisi(s) parmi l'éthylène-acétate de vinyle et les éthylène-(méth)acrylates d'alkyle.

8. Structure multicouche selon la revendication 7, dans laquelle les éthylène-(méth)acrylates d'alkyle sont sélectionnés parmi l'EMA (copolymère d'éthylène-acrylate de méthyle), l'EBA (copolymère d'éthylène-acrylate de butyle) et l'EEA (copolymère d'éthylène-acrylate d' éthyle).

9. Structure multicouche selon la revendication 7 ou 8, dans laquelle le un ou plusieurs copolymère(s) d'éthylène et de (méth)acrylate d'alkyle contient de 5 à 35 % en pds de (méth)acrylate d'alkyle.

10. Structure multicouche selon la revendication 7, dans laquelle l'éthylène-acétate de vinyle contient de 5 à 35 % en pds d'acétate de vinyle.

11. Structure multicouche selon l'une quelconque des revendications précédentes, dans laquelle la couche formant substrat est un papier ou un carton à base de fibres cellulosiques; un film polymère à base de polyester, de polyamide, de polypropylène ou de polyéthylène; ou un textile tissé ou non-tissé à base de polyester, de polypropylène, de coton, de polyamide ou de polyéthylène.

12. Structure multicouche selon l'une quelconque des revendications précédentes, dans laquelle la couche formant substrat ou la structure multicouche a une résistance à la rupture sous traction de 5 à 2 000 Mpa, mesurée selon la norme ASTM D882-83.

13. Structure multicouche selon l'une quelconque des revendications précédentes, qui est à face unique, dans laquelle la couche formant substrat est revêtue sur un seul côté d'une couche intermédiaire et d'une couche externe de polymère hydrophile thermoplastique.

14. Structure multicouche selon l'une quelconque des revendications 1 à 12, qui est double face, dans laquelle la couche formant substrat est revêtue sur les deux côtés d'une couche intermédiaire de copolymère d'éthylène et d'une couche externe d'un polymère hydrophile thermoplastique.

15. Structure multicouche imprimée souple pour l'utilisation en extérieur ou en intérieur comme affichage publicitaire, bannière, ou une bâche pour véhicules, façades de bâtiment, structures, bagages ou similaires, comprenant la structure multicouche selon l'une quelconque des revendications précédentes.
